# EUROPÄISCHE PATENTANMELDUNG

(11) **EP 2 837 475 A1**
(43) Veröffentlichungstag der Anmeldung: **18.02.2015**
(21) Anmeldenummer: 13004110.6
(22) Anmeldetag: 20.08.2013
(51) Int. Cl.: B27K 5/00, A47J 43/28

(54) **Kochbesteck**

(30) Priorität: 13.08.2013 EP 13004026
(71) Anmelder: Hüsler Silkwood GmbH, 47229 Duisburg (DE)
(72) Erfinder: Hüsler, Baltasar, 6376 Emmetten (CH)
(74) Vertreter: Demski, Siegfried

(57) **Zusammenfassung**

Die Erfindung betrifft ein Kochbesteck 1, 10, 20, wobei das Kochbesteck 1, 10, 20 vollständig aus Holz besteht und einen Griffabschnitt 2 und einen Arbeitsabschnitt 3, 12, 22 aufweist. Das Kochbesteck 1, 10, 20 ist dadurch gekennzeichnet, dass es thermisch modifiziert ist oder aus thermisch modifiziertem Holz hergestellt ist, wodurch das Kochbesteck 1, 10, 20 ein im Vergleich zu den aus dem Stand der Technik bekannten Kochbestecken deutlich geringeres Feuchtigkeitsaufnahmevermögen aufweist. Dadurch wird verhindert, dass sich das Kochbesteck 1, 10, 20 durch einen häufigen Feuchteeintrag in das Holz verformt und fault.

## Beschreibung

Die Erfindung betrifft ein Kochbesteck, wobei das Kochbesteck vollständig aus Holz besteht und einen Griffabschnitt und einen Arbeitsabschnitt aufweist.

Hölzerne Kochbestecke sind aus dem Stand der Technik in unterschiedlichster Formgebung bekannt, wobei die Kochbestecke aus unterschiedlichsten Holzarten bestehen. Eine unter den Holzarten für diesen Zweck herausragende Holzart ist Bambus, da dieses neben der mechanischen Belastbarkeit und der glatten, splitterfreien Oberfläche auch eine antibakterielle Wirkung aufweist, welche auch nach zahlreichen Waschvorgängen nicht verloren geht. Weiterhin weist die Bambusoberfläche eine Mikroporosität auf, sodass ein Kochbesteck zum einen eine gute Griffigkeit auch für eine schweißbenetzte Hand aufweist und zum anderen die von dem Kochbesteck durch Hautkontakt und Kontakt mit Speisen aufgenommene Feuchtigkeit schnell wieder an die Umgebungsluft abgegeben wird.

Sämtliche aus dem Stand der Technik bekannte hölzerne Kochbestecke weisen jedoch den Nachteil auf, dass sie durch den beim Hantieren von Speisen bewirkten Feuchteeintrag mit der Zeit ihre Form verändern und faulen. Die Formveränderung wird dabei durch das Quellen des Holzes bewirkt. Zu der Fäulnis kommt es aufgrund der Feuchtigkeitsaufnahme bei dem Zubereiten von Speisen und beim Reinigen des Kochbesteckes, weil die Feuchtigkeit nicht schnell genug an die Umgebungsluft abgegeben wird. Dies ist zum einen durch die Struktur vieler Holzarten und zum anderen durch die häufige Verwendung eines entsprechenden Kochbesteckes bedingt, weswegen die aus dem Stand der Technik bekannten hölzernen Kochbestecke nach jeder Verwendung und Reinigung ausreichend lange getrocknet werden müssten, was bei Anwendung gattungsgemäßer Kochbestecke jedoch selten der Fall ist.

Aufgabe der Erfindung ist es, ein hölzernes Kochbesteck bereitzustellen, welches eine gesteigerte Haltbarkeit aufweist.

Zur Lösung der Aufgabe ist vorgesehen, dass das Kochbesteck thermisch modifiziert ist oder aus thermisch modifiziertem Holz hergestellt ist. Weitere vorteilhafte Ausgestaltungen der Erfindung ergeben sich aus den Unteransprüchen.

Das erfindungsgemäße Kochbesteck besteht aus thermisch modifiziertem Holz, wodurch das Feuchtigkeitsaufnahmevermögen des Holzes, beispielsweise durch Kontakt mit Speisen oder mit einer schweißbenetzten Hand, deutlich reduziert ist. Hierdurch wird die Haltbarkeit des Kochbesteckes erhöht, da eine Feuchtigkeitsaufnahme nicht zum Aufquellen und Faulen des Kochbesteckes führt. Weiterhin ergibt sich insbesondere der Vorteil, dass das erfindungsgemäße Kochbesteck einen im Vergleich zur Handwäsche langwierigen Waschprozess in einer Spülmaschine ausgesetzt werden kann, ohne dass dadurch die Haltbarkeit des Kochbesteckes signifikant herabgesetzt wird. Darüber hinaus erfolgt entsprechend des herabgesetzten Feuchtigkeitsaufnahmevermögens eine Verringerung der Aufnahme von Reinigungschemikalien, welche bei Anwendung von Kochbestecken in die Speisen gelangen könnten. Ein weiterer bedeutender Vorteil des erfindungsgemäßen Kochbesteckes besteht darin, dass Holzbestandteile, wie zum Beispiel der Ligninanteil, bei der thermischen Modifikation zersetzt (pyrolisiert) werden, welche Bakterien als Nahrung dienen. Bakterien, welche sich bei der Benutzung eines Kochbesteckes auf der Oberfläche ablagern oder in dieses eindringen, können sich in oder auf dem erfindungsgemäßen Kochbesteck kaum vermehren, da die von Bakterien verwertbaren Nährstoffe durch die thermische Modifikation sehr umfassend bis vollständig zersetzt wurden. Dies bewirkt, dass das Kochbesteck nicht nur nicht fault, sondern auch, dass das Kochbesteck auch nach längerem Einsatz noch hygienisch einwandfrei ist, was bei den aus dem Stand der Technik bekannten hölzernen Kochbestecken nicht der Fall ist, weswegen diese zum Beispiel in Großküchen oder bei anderen Fremdbewirtungen nicht zum Einsatz kommen.

Bevorzugt umfasst die thermische Modifikation eine Erhitzung des Kochbesteckes oder Holzes in einer sauerstoffarmen oder sauerstofffreien Atmosphäre auf eine Temperatur von über 150 °C, wobei das Kochbesteck oder das Holz der Temperatur über wenigstens 20 Minuten ausgesetzt wird. Durch die Temperatur und die Dauer des Temperatureintrages kann neben der Restfeuchte des Holzes auch die Farbe des Holzes eingestellt werden, sodass das Kochbesteck in unterschiedlichen Farben angeboten werden kann. Die möglichen Farbtöne reichen dabei von einem sehr hellen braun bis zu einem sehr dunklen Braunton.

Gemäß einer besonders bevorzugten Ausgestaltung der Erfindung ist das Kochbesteck stabförmig ausgebildet und weist eine annähernd elliptische oder rechteckige Querschnittsform auf, wobei der Arbeitsabschnitt zumindest eine endseitige Anschrägung aufweist. Ein Kochbesteck mit dieser Ausgestaltung ist besonders leicht und damit kostengünstig herzustellen, da keine auslaufenden Formen, wie beispielsweise bei einem herkömmlichen Bratenwender, oder Durchbrüche vorhanden sind. Ferner eignet sich ein Kochbesteck mit dieser speziellen Ausgestaltung für zahlrelche Elnsatzzwecke, zum Beispiel das Wenden von Fischstäbchen oder kleinen Filets, das Rühren oder Aufführen des Pfannenbodens, das Abschälen von Butter oder das Herauslösen von Kokosbutter aus einer Dose.

Die Erfindung wird im Weiteren anhand der Figuren näher erläutert.

Es zeigt
- Fig. 1: eine Draufsicht auf eine erste Ausführungsform eines erfindungsgemäßen Kochbesteckes,
- Fig. 2: eine Seitenansicht der ersten Ausführungsform des erfindungsgemäßen Kochbesteckes,
- Fig. 3: eine perspektivische Ansicht des Arbeitsabschnittes der ersten Ausführungsform des erfindungsgemäßen Kochbesteckes,
- Fig. 4: eine perspektivische Ansicht des Arbeitsabschnittes einer zweiten Ausführungsform des erfindungsgemäßen Kochbesteckes und
- Fig. 5: eine perspektivische Ansicht des Arbeitsabschnittes einer dritten Ausführungsform des erfindungsgemäßen Kochbesteckes.

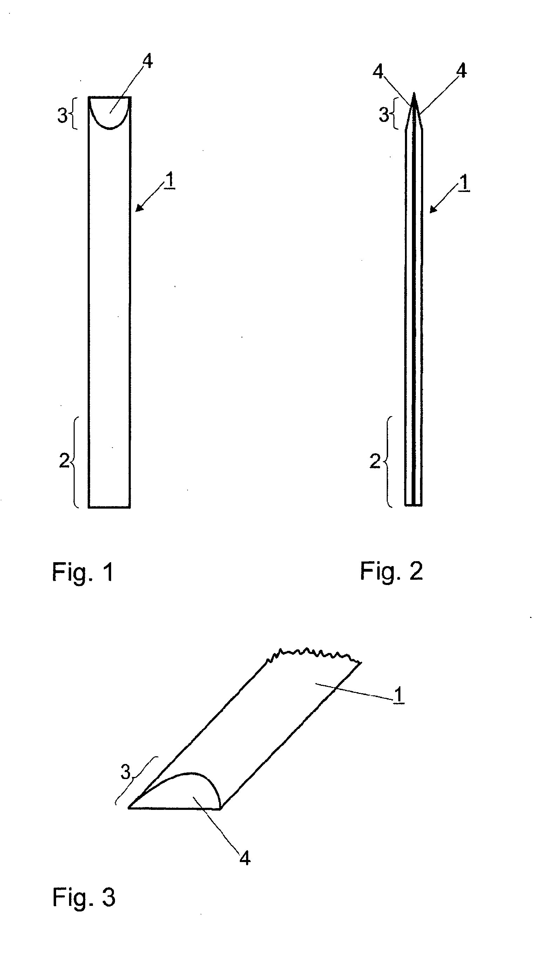

Figur 1 zeigt eine Draufsicht auf eine erste Ausführungsform eines erfindungsgemäßen Kochbesteckes 1. Das Kochbesteck 1 besteht vollständig aus Holz und weist einen Griffabschnitt 2 und einen Arbeitsabschnitt 3 auf. Das Kochbesteck 1 weist ferner eine längliche Form mit einem ovalen Querschnitt auf. Der Arbeitsabschnitt 3 ist endseitig keilförmig zugespitzt ausgebildet, wobei der Arbeitsabschnitt 3 Anschrägungen 4 aufweist, die in Erstreckungsrichtung des Kochbesteckes 1 aufeinander zulaufen. Das Kochbesteck 1 besteht aus thermisch modifiziertem Holz, wobei das Kochbesteck 1 einer thermischen Modifikation unterzogen oder aus thermisch modifiziertem Holz hergestellt werden kann. Bei der thermischen Modifikation wird das Holz in einer sauerstoffarmen oder sauerstofffreien Atmosphäre auf eine Temperatur von über 150 °C erhitzt und der Temperatur wenigstens 20 Minuten ausgesetzt. Durch die thermische Modifikation wird die Feuchteaufnahmefähigkeit des Holzes stark herabgesetzt, sodass die wesentlichen Nachteile der aus dem Stand der Technik bekannten hölzernen Kochbestecke, nämlich das Verformen und Faulen aufgrund eines häufigen Feuchteeintrages, überwunden werden.

Figur 2 zeigt eine Seitenansicht der ersten Ausführungsform des erfindungsgemäßen Kochbesteckes 1, umfassend einen Griffabschnitt 2 und einen Arbeitsabschnitt 3. Der Arbeitsabschnitt 3 weist zwei Anschrägungen 4 auf, welche in Erstreckungsrichtung des Kochbesteckes 1 aufeinander zulaufen, sodass der Arbeitsabschnitt 3 endseitig keilförmig zugespitzt ausgebildet ist.

Figur 3 zeigt eine vergrößerte perspektivische Ansicht des Arbeitsabschnittes 3 der ersten Ausführungsform des erfindungsgemäßen Kochbesteckes 1, welches abseits des Arbeitsabschnittes 3 einen ovalen Querschnitt aufweist. Der Arbeitsabschnitt 3 weist zwei aufeinander zulaufende Anschrägungen 4 auf. Diese spezielle Ausgestaltung des Arbeitsabschnittes macht die erste Ausführungsform des erfindungsgemäßen Kochbesteckes 1 für zahlreiche Einsatzzwecke anwendbar, zum Beispiel das Wenden von Fischstäbchen oder kleinen Filets, das Rühren oder Aufrühren des Pfannenbodens, das Abschälen von Butter oder das Herauslösen von Kokosbutter aus einer Dose. Dahingegen sind die aus dem Stand der Technik bekannten Kochbestecke zumeist für nur einen Einsatzzweck ausgelegt, wie zum Beispiel die bekannten Bratenwender, deren Breite in Richtung des Arbeitsabschnittes stark zunimmt, wodurch zwar das Wenden eines Bratens vereinfacht wird, andere Arbeitsschritte aber umso schwieriger durchführbar sind.

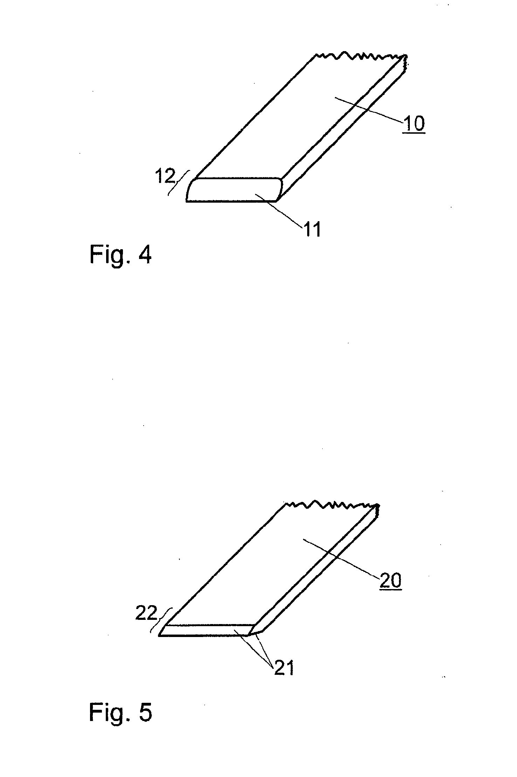

Figur 4 zeigt eine perspektivische Ansicht des Arbeitsabschnittes 12 einer zweiten Ausführungsform des erfindungsgemäßen Kochbesteckes 10, wobei das Kochbesteck 10 zwei ebene einander abgewandte Flächen und abgerundete Längskanten aufweist. Der Arbeitsabschnitt 12 besteht aus einer einseitigen Anschrägung 11, welche sich über die gesamte Breite und Höhe des Kochbesteckes 10 erstreckt.

In Figur 5 ist der Arbeitsabschnitt 22 einer dritten Ausführungsform des erfindungsgemäßen Kochbesteckes 20 in einer perspektivischen Darstellung gezeigt. Die dritte Ausführungsform des Kochbesteckes 20 weist einen rechteckförmigen Querschnitt auf. Der Arbeitsabschnitt 22 besteht aus zwei aufeinander zulaufenden Anschrägungen 21, sodass das Kochbesteck 20 bezüglich seiner Mittelebene eine symmetrische Form aufweist.

### Bezugszeichenliste

- 1: Kochbesteck
- 2: Griffabschnitt
- 3: Arbeitsabschnitt
- 4: Anschrägung
- 10: Kochbesteck
- 11: Anschrägung
- 12: Arbeitsabschnitt
- 20: Kochbesteck
- 21: Anschrägung
- 22: Arbeitsabschnitt

## Patentansprüche

1. Kochbesteck (1, 10, 20), wobei das Kochbesteck (1, 10, 20) vollständig aus Holz besteht und einen Griffabschnitt (2) und einen Arbeitsabschnitt (3, 12, 22) aufweist,
**dadurch gekennzeichnet,**
**dass** das Kochbesteck (1, 10, 20) thermisch modifiziert ist oder aus thermisch modifiziertem Holz hergestellt ist.

2. Kochbesteck (1, 10, 20) nach Anspruch 1,
**dadurch gekennzeichnet,**
**dass** die thermische Modifikation eine Erhitzung des Kochbesteckes (1, 10, 20) oder Holzes in einer sauerstoffarmen oder sauerstofffreien Atmosphäre auf eine Temperatur von über 150 °C umfasst, wobei das Kochbesteck (1, 10, 20) oder das Holz der Temperatur über wenigstens 20 min ausgesetzt wird.

3. Kochbesteck (1,10, 20) nach einem oder mehreren der Ansprüche 1 bis 2,
**dadurch gekennzeichnet,**
**dass** das Kochbesteck (1, 10, 20) stabförmig ausgebildet ist und eine annähernd elliptische oder rechteckige Querschnittsform aufweist, wobei der Arbeitsabschnitt (3, 12, 22) zumindest eine endseitige Anschrägung aufweist.
